# EUROPÄISCHE PATENTSCHRIFT

(11) **EP 1 698 423 B1**
(45) Veröffentlichungstag und Bekanntmachung des Hinweises auf die Patenterteilung: **26.03.2008**
(21) Anmeldenummer: 06003102.8
(22) Anmeldetag: 16.02.2006
(51) Int. Cl.: B23K 20/12, B23K 20/16, B23K 20/233, F01D 5/00, F01D 5/30, B23P 6/00, B23K 101/00, B23K 103/14

(54) **Verfahren zum Reibschweissfügen von einer Laufschaufel an einen Rotorgrundkörper mit Bewegung eines zwischen der Laufschaufel und dem Rotorgrundkörper angeordneten Fügeteils**
Process of assembling by friction welding a rotor blade to a rotor basic body with displacement of an assembling part located between the rotor blade and the rotor basic body
Procédé d'assemblage par soudage par fiction d'une aube de rotor avec le corps d'un rotor comprenant le déplacement d'une pièce de liaison entre l'aube de rotor et le corps du rotor

(30) Priorität: 03.03.2005 DE 102005009769
(43) Veröffentlichungstag der Anmeldung: 06.09.2006
(73) Patentinhaber: MTU Aero Engines GmbH, 80995 München (DE)
(72) Erfinder: Bamberg, Joachim, 85221 Dachau (DE); Satzger, Wilhelm, 80804 München (DE)

(56) Entgegenhaltungen:
- EP-A- 0 513 669
- DD-A- 85 496
- US-A- 5 156 316
- US-A1- 2002 047 037
- US-A1- 2004 112 941
- PATENT ABSTRACTS OF JAPAN Bd. 007, Nr. 095 (M-209), 21. April 1983 (1983-04-21) -& JP 58 020389 A (KAWASAKI HEAVY IND LTD), 5. Februar 1983 (1983-02-05)
- PATENT ABSTRACTS OF JAPAN Bd. 017, Nr. 503 (M-1478), 10. September 1993 (1993-09-10) -& JP 05 131280 A (DAIDO STEEL CO LTD), 28. Mai 1993 (1993-05-28)
- PATENT ABSTRACTS OF JAPAN Bd. 011, Nr. 215 (M-606), 11. Juli 1987 (1987-07-11) -& JP 62 033081 A (INOUE JAPAX RES INC), 13. Februar 1987 (1987-02-13)

## Beschreibung

Die Erfindung betrifft ein Verfahren zum Fügen von Bauteilen, insbesondere zum Fügen einer Laufschaufel an einen Rotorgrundkörper bei der Herstellung oder Reparatur eines integral beschaufelten Gasturbinenrotors siche Anspruch 1 und EP-A-0 513 669).

Bei der Fertigung von Gasturbinen ist das Reibschweißen ein weitverbreitetes Fügeverfahren. Das Reibschweißen gehört zu den sogenannten Pressschweißverfahren, wobei man beim Reibschweißen unter anderem zwischen dem sogenannten linearen Reibschweißen, dem sogenannten Rotationsreibschweißen und dem sogenannten Rührreibschweißen unterscheidet. Beim Reibschweißen werden Bauteile durch Reibung aneinander gefügt bzw. miteinander verbunden. Beim linearen Reibschweißen wird ein Bauteil translatorisch hin- und herbewegt, wohingegen das andere Bauteil stillsteht und mit einer bestimmten Kraft gegen das bewegte Bauteil gedrückt wird. Hierbei passen sich Fügeflächen der miteinander zu verbindenden Bauteile durch Warmverschmieden aneinander an.

Bei der aus dem Dokument EP-A-0 513 669, das als nächstliegenden Stand der Technik angesehen wird, bekannten Vorgehensweise zum Verbinden bzw. Fügen von Bauteilen über lineares Reibschweißen werden zwei miteinander zu verbindende Bauteile direkt aneinander gerieben, wobei ein Bauteil translatorisch hin- und herbewegt wird und vorzugsweise über das andere Bauteil ein definierter Stauchdruck auf die Fügefläche zwischen den beiden Bauteilen ausgeübt wird. Werden die beiden miteinander zu verbindenden Bauteile direkt aneinander gerieben, so sind komplexe Klemmvorrichtungen insbesondere am bewegten Bauteile erforderlich. Es kann zu Verformungen an den miteinander zu verbindenden Bauteilen kommen. Des weiteren entstehen bei der Reibbewegung der miteinander zu verbindenden Bauteile freie Fügeflächen im Bereich der Fügezone, die einer möglichen Kontaminierung, zum Beispiel mit Sauerstoff, aufgesetzt sind. Hierdurch kann die Qualität der Fügeverbindung beeinträchtigt werden. Weiterhin muss bei der aus dem Stand der Technik bekannten Vorgehensweise des linearen Reibschweißens am Ende des Schweißvorgangs das linear hin- und herbewegte Bauteil in seiner Amplitude auf Null gefahren werden, und zwar in exakter Ausrichtung zum feststehenden Bauteil. Dabei einzuhaltende Genauigkeiten liegen in der Größenordnung von 0,1 mm. Diese Genauigkeit kann bei den vorhandenen Massen und Kräften nur sehr schwierig bzw. mit großem Aufwand eingehalten werden.

Aus dem Dokument US 2004/112941 ist ein Reibschweißverfahren bekannt, bei dem zwischen den beiden zu fügenden Bauteilen ein zusätzliches Fügeteil (joining member 30) angeordnet wird. Dies hat den Vorteil, dass beim Reibschweißvorgang nur das relativ kleine und leichte Fügeteil bewegt werden muss, die eigentlichen Bauteile sind auf einem Träger statisch fixiert. Das Fügeteil ist nach Art eines Keils mit zwei ebenen, einen spitzen Winkel einschließenden Fügeflächen ausgeführt. An jedem Bauteil ist eine korrespondierende, schräge Fügefläche vorgesehen. Die für das Schweißen erforderliche, hohe Flächenpressung in den Fügeflächen wird dadurch erzeugt, dass das keilförmige Fügeteil von der Seite zwischen die mit Abstand fixierten Bauteile gepresst wird. Das hat aber den Nachteil, dass die Bauteile in den plastisch erweichenden Fügezonen seitlich verformt werden. Dabei sind auch Asymmetrien bzw. Inhomogenitäten im Schweißgefüge zu erwarten. Letztlich ergibt sich eine Schweißverbindung, die hinsichtlich Belastbarkeit und Maßhaltigkeit nicht optimal und somit insbesondere für hochbelastete Gasturbinenbauteile nicht geeignet ist.

Aus dem Dokument DD 85 496 A ist ein Schweißverfahren bekannt, welches eine Kombination aus mechanischem Reibschweißen und elektrischem Widerstandsschweißen darstellt. Dabei werden die zu verbindenden Teile relativ zueinander bewegt, es gibt kein separates, zwischen die Teile gesetztes Fügeteil.

Hiervon ausgehend liegt der vorliegenden Erfindung das Problem zu Grunde, ein neuartiges Verfahren zum Fügen von Bauteilen zu schaffen.

Dieses Problem wird durch ein Verfahren zum Fügen von Bauteilen gemäß Patentanspruch 1 gelöst.

Das Verfahren umfasst die folgenden, an sich bekannten Schritte: a) Bereitstellen von zwei miteinander zu verbindenden bzw. aneinander zu fügenden Bauteilen; b) Bereitstellen eines Fügeteils; c) Ausrichten der beiden miteinander zu verbindenden Bauteile und des Fügeteils, derart, dass das Fügeteil als Einsatz zwischen den beiden miteinander zu verbindenden Bauteilen angeordnet ist; d) Verbinden der beiden Bauteile unter Zwischenanordnung des Fügeteils, dadurch, dass das Fügeteil gegenüber den beiden miteinander zu verbindenden, stillstehenden Bauteilen bewegt wird.

Erfindungsgemäß wird ein Fügeteil mit zwei parallelen Fügeflächen verwendet, die Stauchkraft wird über die stillstehenden Bauteile auf die Fügezonen ausgeübt.

Beim erfindungsgemäßen Verfahren zum Fügen von Bauteilen werden die beiden miteinander zu verbindenden Bauteile nicht direkt aneinander gerieben, sondern vielmehr unter Zwischenschaltung eines als Einsatz dienenden Fügeteils. Die beiden miteinander zu verbindenden Bauteile stehen still, das Fügeteil mit parallelen Fügeflächen wird relativ zu den beiden miteinander zu verbindenden Bauteilen bewegt. Über die beiden stillstehenden Bauteile wird ein Stauchdruck auf die Fügeflächen zwischen den miteinander zu verbindenden Bauteilen und dem Fügeteil ausgeübt. Mithilfe des erfindungsgemäßen Verfahrens können die beiden Teilschritte des "Reibens" und des "Stauchens" entkoppelt werden, wodurch mit geringeren Klemmkräften an den Bauteilen gearbeitet werden kann. Hierdurch wird die Gefahr unerwünschter Bauteilverformungen beim insbesondere linearen Reibschweißen reduziert. Weiterhin können die einzuhaltenden Genauigkeiten in der Schweißverbindung einfach realisiert werden, da das Fügeteil am Ende des Schweißprozesses einfach stehen bleiben kann, ohne dass eine genaue Positionierung des Fügeteils eingehalten werden muss. Asymmetrien bzw. Inhomogenitäten im Fügebereich werden vermieden.

Das Fügeteil ist vorzugsweise derart bemessen, dass bei Bewegung desselben im Bereich der stillstehenden Bauteile keine freien Fügeflächen entstehen. Hierdurch wird die Gefahr von Kontaminierungen durch zum Beispiel Sauerstoff im Bereich der Fügezonen minimiert.

Aufgrund des Aufmaßes im Bereich des Fügeteils kann das erfindungsgemäße Reibschweißen nunmehr auch für Reparaturarbeiten eingesetzt werden. Insbesondere eignet sich das Verfahren zur Reparatur von integral beschaufelten Gasturbinenrotoren durch Austausch einer beschädigten Laufschaufel gegen eine neue Laufschaufeln.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Seitenansicht von zwei im Sinne des erfindungsgemäßen Verfahrens miteinander zu verbindenden Bauteilen, nämlich einer an einen Rotorgrundkörper zu fügenden Laufschaufel;
- Fig. 2: eine schematisierte Seitenansicht der Anordnung gemäß Fig. 1.

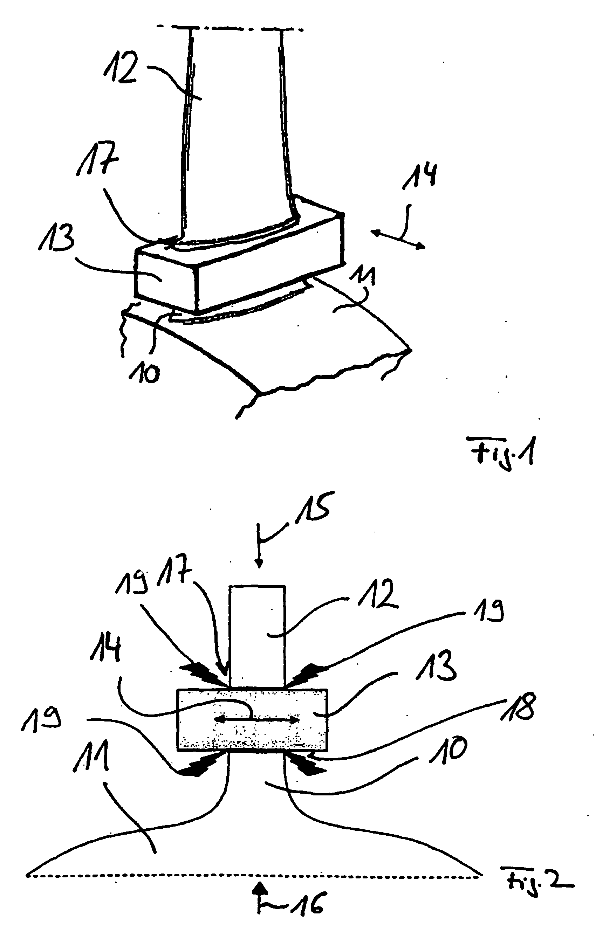

Nachfolgend wird die Erfindung unter Bezugnahme auf Fig. 1 und 2 in größerem Detail beschrieben.

Fig. 1 und 2 verdeutlichen das erfindungsgemäße Verfahren zum Fügen von Bauteilen bei der Herstellung bzw. Reparatur eines integral beschaufelten Gasturbinenrotors, wobei gemäß Fig. 1 und 2 an einen Höcker 10 eines Rotorgrundkörpers 11 ein Schaufelblatt 12 zu fügen ist.

Im Sinne der hier vorliegenden Erfindung wird neben den beiden miteinander zu verbindenden Bauteilen, nämlich neben dem Rotorgrundkörper 11 sowie dem Schaufelblatt 12, ein Fügeteil 13 bereitgestellt. Zum Fügen des Schaufelblatts 12 an den Höcker 10 des Rotorgrundkörpers 11 werden Schaufelblatt 12, Rotorgrundkörper 11 sowie Fügeteil 13 derart zueinander ausgerichtet, dass das Fügeteil 13 zwischen dem Höcker 10 und dem Schaufelblatt 12 angeordnet bzw. positioniert ist.

Zum Verbinden von Schaufelblatt 12 und Rotorgrundkörper 11 wird nun das Fügeteil 13 im Sinne des Doppelpfeils 14 gegenüber dem Rotorgrundkörper 11 sowie dem Schaufelblatt 12 translatorisch bzw. linear hin- und herbewegt, wobei sowohl der Rotorgrundkörper 11 als auch das Schaufelblatt 12 stillstehen. Weiterhin wird im Sinne der Pfeile 15 sowie 16 über beide stillstehenden Bauteile, nämlich über den stillstehenden Rotorgrundkörper 11 sowie das ebenfalls stillstehende Schaufelblatt 12, eine Stauchkraft und damit ein Stauchdruck auf die beiden Fügezonen 17 und 18 zwischen den beiden miteinander zu verbindenden Bauteilen 11 und 12 sowie dem Fügeteil 13 aufgebracht.

Hierbei erfolgt ein Warmverschmieden im Bereich der Fügezonen 17 und 18. Sich im Bereich der Fügezonen 17 und 18 ausbildende Schweißwulste 19 (sogenannter flash) sind in Fig. 2 stark schematisiert dargestellt. Die Fügezone 17 ist dabei zwischen dem Schaufelblatt 12 und dem Fügeteil 13 ausgebildet. Die Fügezone 18 befindet zwischen dem Fügeteil 13 und dem Höcker 10 des Rotorgrundkörpers 11.

Im Sinne der hier vorliegenden Erfindung werden demnach die miteinander zu verbindenden Bauteile 11 und 12, im gezeigten Ausführungsbeispiel der Rotorgrundkörper 11 sowie das Schaufelblatt 12, nicht unmittelbar aneinander gerieben, sondern vielmehr unter Zwischenschaltung des Fügeteils 13. Beide miteinander zu verbindenden Bauteile 11 und 12 stehen demnach beim linearen Reibschweißen still. Lediglich das Fügeteil 13 wird im Sinne einer bzw. translatorischen Bewegung relativ zu den beiden stillstehenden Bauteilen 11 und 12 hin- und herbewegt. Hierdurch kann im Bereich der beiden miteinander zu verbindenden Bauteile 11 und 12, nämlich im Bereich des Rotorgrundkörpers 11 sowie des Schaufelblatts 12 mit geringeren Klemmkräften gearbeitet werden. Eine unerwünschte Verformung und ein unerwünschter Versatz von Schaufelblatt 12 sowie Rotorgrundkörper 11 können so vermieden werden.

Das bereitgestellte Fügeteil 13 verfügt vorzugsweise über ein Aufmaß, und zwar derart, dass das Fügeteil 13 beim Bewegen desselben gegenüber den beiden miteinander zu verbindenden, stillstehenden Bauteilen 11 und 12 allseitig vorsteht. Beim Bewegen des Fügteils 13 relativ zu den beiden miteinander zu verbindenden, stillstehenden Bauteilen 11 und 12 werden demnach freie Fügeflächen im Bereich der stillstehenden Bauteile 11 und 12 vermieden. Im gezeigten Ausführungsbeispiel bedeutet dies, dass sowohl im Bereich des Schaufelblatts 12 als auch im Bereich des Höckers 10 des Rotorgrundkörpers 11 beim linearen bzw. translatorischen Reibschweißen keine freien Fügeflächen entstehen, die einer Kontaminierungsgefahr mit zum Beispiel Sauerstoff ausgesetzt sind. Hierdurch wird die Qualität der Schweißverbindung verbessert.

Das Fügeteil 13 wird vorzugsweise mit einer Frequenz in der Größenordnung zwischen 10 Hz und 30 Hz, insbesondere mit einer Frequenz von in etwa 20 Hz, gegenüber den beiden stillstehenden Bauteilen 11 und 12 hin- und herbewegt. Der Hub des Fügeteils 13 liegt dabei in einer Größenordnung zwischen 0,1 mm und 3 mm, insbesondere bei in etwa 2 mm. Die zum Schweißen über die stillstehenden Bauteile aufgebrachte Stauchkraft liegt bei maximal 50.000 N.

Beim erfindungsgemäßen linearen bzw. translatorischen Reibschweißen werden vorzugsweise das Fügeteil 13 oder die Fügezonen 17,18 vor und/oder während der Reibbewegung des Fügeteils 13 zusätzlich erwärmt bzw. erhitzt. Dies kann durch Wärmestrahlung oder induktives Erhitzen erfolgen. Hierdurch es ist möglich, die zum Verschweißen erforderliche Prozesstemperatur leichter zu erzielen.

Es hat sich gezeigt, dass eine gezielte Erwärmung bzw. Erhitzung der Fügezonen 17,18 in der Weise möglich ist, dass vor und/oder während der Reibbewegung des Fügeteils 13 elektrischer Strom durch die Fügezonen geleitet wird. Da der Kontaktwiderstand der Fügezonen höher ist, als der elektrische Widerstand des Bauteilwerkstoffs, werden gerade die Kontaktflächen massiv erwärmt und somit genau die Stellen, die gefügt werden sollen.
Die Wärmeeinflusszonen sind dabei sehr dünn, wodurch sich besonders schwingfeste Verbindungen ergeben. Es kann vorteilhaft sein, den elektrischen Strom über das Fügeteil 13 zu- bzw. abzuführen. Es ist auch möglich, den Strom über eines der Bauteile 11,12 zu- und über das jeweils andere Bauteil abzuführen.

Wie bereits erwähnt, verfügt das Fügeteil 13 gegenüber den miteinander zu verbindenden Bauteilen über ein Aufmaß. Nach Durchführen des Reibschweißens erfolgt dann im Bereich des Fügeteils 13 eine Nachbearbeitung durch Materialabtrag, um die gewünschte Endkontur herzustellen.

Das Fügeteil 13 kann mit Sensoren, z.B. Thermosensoren, ausgerüstet werden, um so den Schweißvorgang zu überwachen und abhängig hiervon zu regeln.

In Fig. 1 und 2 wird das Fügeteil 13 im Sinne des Doppelpfeils 14 gegenüber dem Rotorgrundkörper 11 sowie dem Schaufelblatt 12 in einer Richtung translatorisch bzw. linear hin- und herbewegt, die in etwa senkrecht zur radialen Erstreckung des Rotorgrundkörpers 11 sowie des Schaufelblatts 12 verläuft. Es sei darauf hingewiesen, dass diese Richtung auch schräg zur radialen Erstreckung des Rotorgrundkörpers 11 sowie des Schaufelblatts 12 verlaufen kann. Dies kann aus Festigkeits- oder Fertigungsgründen bevorzugt sein.

Das erfindungsgemäße Verfahren eignet sich sowohl zur Herstellung als auch zur Reparatur von integral beschaufelten Gasturbinenrotoren. In dem Fall, in dem der Rotorgrundkörper sowie das Schaufelblatt aus einer Titanbasislegierung hergestellt sind, wird ein Fügeteil verwendet, welches ebenfalls aus einer Titanbasislegierung besteht.

## Patentansprüche

1. Verfahren zum Fügen von Bauteilen, insbesondere zum Fügen einer Laufschaufel an einen Rotorgrundkörper bei der Herstellung und/oder Reparatur eines integral beschaufelten Gasturbinenrotors, mit folgenden Schritten:
a) Bereitstellen von zwei miteinander zu verbindenden bzw. aneinander zu fügenden Bauteilen (11, 12);
b) Bereitstellen eines Fügeteils (13);
c) Ausrichten der beiden miteinander zu verbindenden Bauteile (11, 12) und des Fügeteils (13), derart, dass das Fügeteil (13) als Einsatz zwischen den beiden miteinander zu verbindenden Bauteilen (11, 12) angeordnet ist;
d) Verbinden der beiden Bauteile (11, 12) unter Zwischenanordnung des Fügeteils (13), **dadurch**, dass das Fügeteil (13) gegenüber den beiden miteinander zu verbindenden, stillstehenden Bauteilen (11, 12) bewegt wird,
wobei das Fügeteil (13) zwei zueinander parallele Fügeflächen zur Ausbildung zweier paralleler Fügezonen (17,18) aufweist, und die Stauchkraft auf die Fügezonen (17, 18) über die stillstehenden Bauteile (11, 12) ausgeübt wird.

2. Verfahren nach Anspruch 1,
**dadurch gekennzeichnet,**
**dass** das Fügeteil (13) derart bemessen wird, dass das Fügeteil (13) beim Bewegen desselben gegenüber den beiden miteinander zu verbindenden, stillstehenden Bauteilen (11, 12) allseitig vorsteht.

3. Verfahren nach Anspruch 1 oder 2,
**dadurch gekennzeichnet,**
**dass** das Fügeteil (13) derart bemessen wird, dass beim Bewegen desselben im Bereich der stillstehenden Bauteile (11, 12) keine freien Fügeflächen entstehen.

4. Verfahren nach einem der Ansprüche 1 bis 3,
**dadurch gekennzeichnet,**
**dass** das Fügeteil (13) mit einer Frequenz von 10 Hz bis 30 Hz, insbesondere mit einer Frequenz von in etwa 20 Hz, gegenüber den beiden stillstehenden Bauteilen (11, 12) hin- und herbewegt wird.

5. Verfahren nach einem der Ansprüche 1 bis 4,
**dadurch gekennzeichnet,**
**dass** das Fügeteil (13) mit einem Hub von 0,1 mm bis 3 mm, insbesondere mit einem Hub von in etwa 2 mm, gegenüber den beiden stillstehenden Bauteilen (11, 12) hin- und herbewegt wird.

6. Verfahren nach einem der Ansprüche 1 bis 5,
**dadurch gekennzeichnet,**
**dass** bei der Herstellung und/oder Reparatur eines integral beschaufelten Gasturbinenrotors als miteinander zu verbindende Bauteile ein Schaufelblatt (12) und ein Rotorgrundkörper (11) aus jeweils einer Titanbasislegierung bereitgestellt werden, die über ein Fügeteil (13) aus einer Titanbasislegierung miteinander verschweißt werden.

7. Verfahren nach einem der Ansprüche 1 bis 6,
**dadurch gekennzeichnet,**
**dass** das Fügeteil (13) oder die Fügezonen (17,18) vor und/oder während der Reibbewegung des Fügeteils (13) zusätzlich erwärmt bzw. erhitzt werden, beispielsweise durch Wärmestrahlung oder induktives Erhitzen.

8. Verfahren nach einem der Ansprüche 1 bis 7, **dadurch gekennzeichnet, dass** vor und/oder während der Reibbewegung des Fügeteils (13) ein elektrischer Strom durch die Fügezonen (17,18) geleitet wird.

9. Verfahren nach Anspruch 8, **dadurch gekennzeichnet, dass** der elektrische Strom über das Fügeteil (13) zu - bzw. abgeführt wird.

10. Verfahren nach einem der Ansprüche 1 bis 9,
**dadurch gekennzeichnet,**
**dass** das Fügeteil (13) gegenüber dem Rotorgrundkörper (11) sowie dem Schaufelblatt (12) in einer Richtung translatorisch bzw. linear hin- und herbewegt wird, die in etwa senkrecht zur radialen Erstreckung des Rotorgrundkörpers (11) sowie des Schaufelblatts (12) verläuft.

11. Verfahren nach einem der Ansprüche 1 bis 9,
**dadurch gekennzeichnet,**
**dass** das Fügeteil (13) gegenüber dem Rotorgrundkörper (11) sowie dem Schaufelblatt (12) in einer Richtung translatorisch bzw. linear hin- und herbewegt wird, die schräg zur radialen Erstreckung des Rotorgrundkörpers (11) sowie des Schaufelblatts (12) verläuft.

12. Verfahren nach einem der Ansprüche 1 bis 11,
**dadurch gekennzeichnet,**
**dass** der Schweißvorgang über dem Fügeteil (13) zugeordnete Sensoren überwacht und abhängig hiervon geregelt wird.

## Claims

1. A method for joining components, in particular for joining a rotor blade to a basic rotor body in the case of the production and/or repair of a gas turbine rotor with integral blading, having the following steps:
a) provision of two components (11, 12) that are to be connected together or joined to one another;
b) provision of a joining portion (13);
c) alignment of the two components (11, 12) that are to be connected together and of the joining portion (13) in such a way that the joining portion (13) is arranged as an insert between the two components (11, 12) that are to be connected together;
d) connection of the two components (11, 12) with intermediate arrangement of the joining portion (13) in that the joining portion (13) is moved in relation to the two stationary components (11, 12) that are to be connected together,
wherein the joining portion (13) has two joining faces that are parallel to each other in order to form two parallel joining zones (17, 18), and the compressive force is exerted on the joining zones (17, 18) by way of the stationary components (11, 12).

2. A method according to claim 1, **characterised in that** the joining portion (13) is dimensioned in such a way that the joining portion (13) in the case of the movement of the same in relation to the two stationary components (11, 12) that are to be connected together juts out on all sides.

3. A method according to claim 1 or 2, **characterised in that** the joining portion (13) is dimensioned in such a way that in the case of the movement of the same in the region of the stationary components (11, 12) no free joining faces emerge.

4. A method according to one of claims 1 to 3, **characterised in that** the joining portion (13) is moved to and fro in relation to the two stationary components (11, 12) with a frequency of 10 Hz to 30 Hz, in particular with a frequency of approximately 20 Hz.

5. A method according to one of claims 1 to 4, **characterised in that** the joining portion (13) is moved to and fro in relation to the two stationary components (11, 12) with a stroke of 0.1 mm to 3 mm, in particular with a stroke of approximately 2 mm.

6. A method according to one of claims 1 to 5, **characterised in that** in the case of the production and/or repair of a gas turbine rotor with integral blading, as components that are to be connected together a blade (12) and a basic rotor body (11) are provided which in each case are made from a titanium-base alloy and can be welded together by way of a joining portion (13) made from a titanium-base alloy.

7. A method according to one of claims 1 to 6, **characterised in that** the joining portion (13) or the joining zones (17, 18), before and/or during the frictional movement of the joining portion (13), are additionally warmed or heated, for example by means of heat radiation or inductive heating.

8. A method according to one of claims 1 to 7, **characterised in that** an electric current is conducted through the joining zones (17, 18) before and/or during the frictional movement of the joining portion (13).

9. A method according to claim 8, **characterised in that** the electric current is supplied or removed by way of the joining portion (13).

10. A method according to one of claims 1 to 9, **characterised in that** the joining portion (13) is moved to and fro in a translatory or linear manner in relation to the basic rotor body (11) and also the blade (12) in a direction extending substantially perpendicularly with respect to the radial extent of the basic rotor body (11) and also the blade (12).

11. A method according to one of claims 1 to 9, **characterised in that** the joining portion (13) is moved to and fro in a translatory or linear manner in relation to the basic rotor body (11) and also the blade (12) in a direction extending obliquely with respect to the radial extent of the basic rotor body (11) and also the blade (12).

12. A method according to one of claims 1 to 11, **characterised in that** the welding process is monitored by way of sensors associated with the joining portion (13) and is controlled as a function thereof.

## Revendications

1. Procédé d'assemblage de composants, en particulier pour l'assemblage d'une aube de rotor à un corps de base de rotor lors de la fabrication et/ou de la réparation d'un rotor de turbine à gaz intégralement garni d'aubes, comprenant les étapes suivantes :
a) préparation de deux composants (11, 12) à relier ou à assembler l'un avec l'autre ;
b) préparation d'une pièce d'assemblage (13);
c) orientation des deux composants à relier l'un à l'autre (11, 12) et de la pièce d'assemblage (13), de telle sorte que la pièce d'assemblage (13) est disposée en insert entre les deux composants (11, 12) à relier l'un à l'autre ;
d) liaison des deux composants (11, 12) par l'intermédiaire de la pièce d'assemblage (13), en déplaçant la pièce d'assemblage (13) par rapport aux deux composants fixes (11, 12) à relier l'un à l'autre,
la pièce d'assemblage (13) présentant deux surfaces d'assemblage parallèles l'une à l'autre pour former des zones d'assemblage parallèles (17, 18), et la force de refoulement étant exercée sur les zones d'assemblage (17, 18) par les composants fixes (11, 12).

2. Procédé selon la revendication 1,
**caractérisé en ce que**
la pièce d'assemblage (13) est dimensionnée pour dépasser de tous les côtés, lors de son déplacement par rapport aux deux composants fixes (11, 12) à relier l'un à l'autre.

3. Procédé selon la revendication 1 ou 2,
**caractérisé en ce que**
la pièce d'assemblage (13) est dimensionnée de telle sorte que lors de son déplacement dans la zone des composants fixes (11, 12), on n'obtient aucune surface d'assemblage libre.

4. Procédé selon l'une des revendications 1 à 3,
**caractérisé en ce que**
la pièce d'assemblage (13) se déplace d'avant en arrière à une fréquence de 10 Hz à 30 Hz, en particulier d'environ 20 Hz, par rapport aux deux composants fixes (11, 12).

5. Procédé selon l'une des revendications 1 à 4,
**caractérisé en ce que**
la pièce d'assemblage (13) se déplace d'avant en arrière avec une course de 0,1 mm à 3 mm, en particulier avec une course d'environ 2 mm, par rapport aux deux composants fixes (11, 12).

6. Procédé selon l'une des revendications 1 à 5,
**caractérisé en ce que**
lors de la fabrication et/ ou de la réparation d'un rotor de turbine à gaz intégralement garni d'aubes, on met à disposition en tant que composants à relier l'un à l'autre un aubage (12) et un corps de base de rotor (11) respectivement en un alliage à base de titane, soudés l'un à l'autre par une pièce d'assemblage (13) en un alliage à base de titane.

7. Procédé selon l'une des revendications 1 à 6,
**caractérisé en ce que**
la pièce d'assemblage (13) ou les zones d'assemblage (17, 18) sont chauffées en supplément avant et/ ou pendant le mouvement de friction de la pièce d'assemblage (13), par exemple par rayonnement thermique ou chauffage inductif.

8. Procédé selon l'une des revendications 1 à 7,
**caractérisé en ce qu'**
avant et/ou pendant le mouvement de friction de la pièce d'assemblage (13), un courant électrique est conduit à travers les zones d'assemblage (17, 18).

9. Procédé selon la revendication 8,
**caractérisé en ce que**
le courant électrique est amené ou évacué par la pièce d'assemblage (13).

10. Procédé selon l'une des revendications 1 à 9,
**caractérisé en ce que**
la pièce d'assemblage (13) se déplace d'avant en arrière de façon translatoire ou linéaire par rapport au corps de base de rotor (11) et à l'aubage (12) dans une direction qui s'étend approximativement perpendiculairement à l'extension radiale du corps de base de rotor (11) ainsi que de l'aubage (12).

11. Procédé selon l'une des revendications 1 à 9,
**caractérisé en ce que**
la pièce d'assemblage (13) se déplace d'avant en arrière de façon translatoire ou linéaire par rapport au corps de base de rotor (11) ainsi qu'à l'aubage (12) dans une direction qui s'étend à l'oblique par rapport à l'extension radiale du corps de base de rotor (11) ainsi que de l'aubage (12).

12. Procédé selon l'une des revendications 1 à 11,
**caractérisé en ce que**
le processus de soudage est surveillé par des capteurs associés à la pièce d'assemblage (13) et est régulé en conséquence.
